(19) **Europäisches Patentamt**
**European Patent Office**
**Office européen des brevets**

(11) **EP 2 780 771 B1**

(12) **FASCICULE DE BREVET EUROPEEN**

(45) Date de publication et mention
de la délivrance du brevet:
**21.10.2015 Bulletin 2015/43**

(51) Int Cl.:
*H02M 7/5387* (2007.01)  *G05F 1/625* (2006.01)
*G05F 1/10* (2006.01)  *H02M 1/00* (2007.01)

(21) Numéro de dépôt: **12783602.1**

(22) Date de dépôt: **08.11.2012**

(86) Numéro de dépôt international:
**PCT/EP2012/072152**

(87) Numéro de publication internationale:
**WO 2013/072246 (23.05.2013 Gazette 2013/21)**

(54) **PROCÉDÉ ET SYSTÈME DE COMMANDE POUR CORRIGER LES TENSIONS À APPLIQUER À UNE CHARGE ÉLECTRIQUE**

VERFAHREN UND SYSTEM ZUR KORREKTUR DER AUF EINE ELEKTRISCHE LAST ANZUWENDENDEN SPANNUNGEN

CONTROL METHOD AND SYSTEM FOR CORRECTING THE VOLTAGES TO BE APPLIED TO AN ELECTRICAL LOAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2011 FR 1160381**

(43) Date de publication de la demande:
**24.09.2014 Bulletin 2014/39**

(73) Titulaire: **Schneider Toshiba Inverter Europe SAS 27120 Pacy sur Eure (FR)**

(72) Inventeurs:
• **LE GOUALEC, Philippe**
  **F-27200 Vernon (FR)**
• **MALRAIT, François**
  **F-27120 Jouy sur Eure (FR)**
• **RUAULT, Patrice**
  **F-78450 Villepreux (FR)**

(74) Mandataire: **Bié, Nicolas et al
Schneider Electric Industries SAS
Service Propriété Industrielle
35 rue Joseph Monier - CS 30323
92506 Rueil-Malmaison Cedex (FR)**

(56) Documents cités:
**EP-A1- 2 362 515     EP-A2- 0 595 319
WO-A1-2004/006421     WO-A1-2009/138808**

**Description**

**Domaine technique de l'invention**

La présente invention se rapporte à un procédé et un système de commande pour corriger les tensions de commande à appliquer à une charge électrique.

**Etat de la technique**

De manière connue, un convertisseur de puissance comporte un module onduleur doté de plusieurs bras de commutation (par exemple trois bras de commutation) reliés chacun à une charge électrique à commander. Les bras de commutation sont connectés en parallèle entre deux lignes d'alimentation connectées à une source de tension. Chaque bras comporte par exemple au moins deux interrupteurs connectés en série entre les deux lignes d'alimentation et un point milieu de connexion situé entre le premier interrupteur et le deuxième interrupteur et connecté à une charge électrique. Chaque interrupteur comporte par exemple un transistor et éventuellement une diode si le transistor est de type IGBT.

Dans un bras de commutation d'un module onduleur classique, les deux interrupteurs sont commandés par des signaux MLI complémentaires, c'est-à-dire que lorsque l'un des interrupteurs est à l'état fermé, l'autre interrupteur est à l'état ouvert et inversement. En outre, pour éviter que les deux interrupteurs se trouvent à l'état fermé en même temps, un temps-mort est inséré entre les temps de commutation à l'état fermé des deux interrupteurs. Pendant ce temps-mort, les deux interrupteurs sont donc à l'état ouvert. Ainsi on évite à coup sûr le court-circuit entre les deux lignes d'alimentation et les pointes de courant qui pourraient être occasionnées par ce court-circuit.

Comme exemples de l'art antérieur, voir WO2004006421, EP2362515, EP0595319 ou WO2009138808.

En fonction d'une tension désirée à appliquer à la charge électrique, chaque bras de commutation est commandé pour obtenir une tension de sortie. A cause de la chute de tension intrinsèque de chaque interrupteur, de la résistance de chaque interrupteur et de l'insertion des temps-morts dans la commande MLI, il s'avère que la tension de sortie réellement appliquée est toujours différente de la tension désirée. Par conséquent, il est nécessaire de mettre en place une compensation en tension pour que chaque tension réellement appliquée à la charge électrique soit égale à la tension désirée. Pour répondre à ce problème, la plupart des méthodes connues dans l'état de la technique sont mises en oeuvre à l'aide d'une instrumentation complexe.

Le but de l'invention est de proposer un procédé de commande permettant de compenser les non-linéarités du module onduleur d'un convertisseur de puissance, ledit procédé de commande étant simple, moins coûteux et facile à mettre en oeuvre.

**Exposé de l'invention**

Ce but est atteint par un procédé de commande mis en oeuvre dans un convertisseur de puissance, ledit convertisseur de puissance comportant un module onduleur commandé par une loi de commande permettant de déterminer une tension de commande à appliquer à une charge électrique en fonction d'une tension de commande de référence, le procédé de commande comportant :

- une étape de mesure d'une tension réelle appliquée à la charge électrique,
- une première étape de filtrage d'une tension représentative de la tension réelle appliquée à la charge électrique pour obtenir une première tension filtrée,
- une deuxième étape de filtrage d'une tension représentative de la tension de commande de référence pour obtenir une deuxième tension filtrée,
- une étape de détermination d'une valeur de correction à appliquer à la tension de commande de référence, ladite valeur de correction étant déterminée à partir de la première tension filtrée et de la deuxième tension filtrée.

Selon une particularité, la première étape de filtrage est mise en oeuvre grâce à un filtre passe-bas de type électronique.

Selon une autre particularité, la deuxième étape de filtrage est mise en oeuvre grâce à un filtre passe-bas de type logiciel.

Selon une autre particularité, la valeur de correction est déterminée en employant un correcteur à action proportionnelle-intégrale.

L'invention concerne également un système de commande employé dans un convertisseur de puissance, ledit convertisseur de puissance comportant un module onduleur commandé par une loi de commande permettant de déterminer une tension de commande à appliquer à une charge électrique en fonction d'une tension de commande de référence, le système de commande comportant :

- des moyens de mesure d'une tension réelle appliquée à la charge électrique,
- des premiers moyens de filtrage d'une tension représentative de la tension réelle appliquée à la charge électrique pour obtenir une première tension filtrée,
- des deuxièmes moyens de filtrage d'une tension représentative de la tension de commande de référence pour obtenir une deuxième tension filtrée,
- des moyens de détermination d'une valeur de correction à appliquer à la tension de commande de référence en fonction de la première tension filtrée et de la deuxième tension filtrée.

Selon une particularité, les premiers moyens de filtrage comportent un filtre passe-bas de type électronique.

Selon une autre particularité, les deuxièmes moyens de filtrage comportent un filtre passe-bas de type logiciel.

Selon une autre particularité, la constante de temps des premiers moyens de filtrage et la constante de temps des deuxièmes moyens de filtrage sont sensiblement identiques.

Selon une autre particularité, la valeur de correction est déterminée en employant un correcteur à action proportionnelle-intégrale.

Selon l'invention, utiliser un filtre passe-bas de type électronique pour filtrer la tension réelle mesurée permet de fonctionner dans une dynamique de temps lente qui correspond à la dynamique de temps du courant présent dans la phase de sortie, ce courant correspondant à la grandeur finale à contrôler.

## Brève description des figures

D'autres caractéristiques et avantages vont apparaître dans la description détaillée qui suit en se référant à un mode de réalisation donné à titre d'exemple et représenté par les dessins annexés sur lesquels :

- La figure 1 représente l'étage de sortie d'un convertisseur de puissance de type variateur de vitesse.

- La figure 2 représente un synoptique de commande d'un convertisseur de puissance, ledit synoptique illustrant le procédé de commande de l'invention.

## Description détaillée d'au moins un mode de réalisation

L'invention s'applique à la commande d'un convertisseur de puissance et plus précisément à la détermination d'une correction en tension à appliquer à une charge électrique C connectée au convertisseur de puissance.

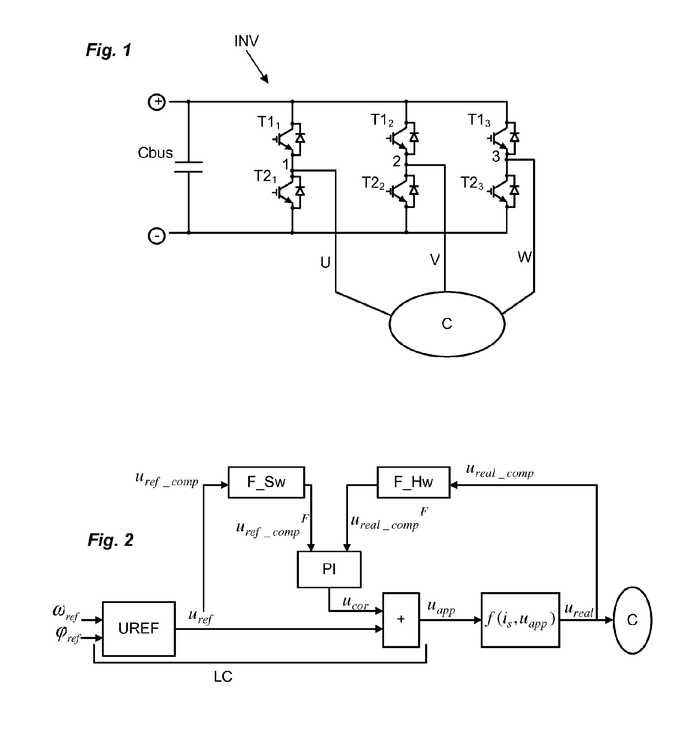

En référence à la figure 1, un convertisseur de puissance comporte un module onduleur INV à source de tension. Par onduleur INV à source de tension, on entend tous les onduleurs classiques à deux niveaux ou plus qui comportent un bus continu d'alimentation, de même que les onduleurs dits à condensateur flottant ("flying capacitor") et les onduleurs de type convertisseur matriciel ("matrix converter"). Dans la suite de la description, on s'intéresse plus particulièrement à un onduleur classique à deux niveaux mais il faut comprendre que l'invention s'applique à tout type de convertisseur de puissance qui comporte au moins un bras de commutation modélisable par un interrupteur.

De manière connue, un module onduleur INV classique tel que représenté sur la figure 1 comporte deux lignes d'alimentation, une ligne d'alimentation positive et une ligne d'alimentation négative, entre lesquelles sont connectés un condensateur de bus Cbus et plusieurs bras de commutation 1, 2, 3 (trois bras de commutation sur la figure 1). Typiquement, chaque bras de commutation 1, 2, 3 comporte au moins deux interrupteurs de commutation ($T1_1$, $T2_1$, $T1_2$, $T2_2$, $T1_3$, $T2_3$) connectés entre les deux lignes d'alimentation. Sur chaque bras, un point milieu de connexion (désigné également 1, 2, 3) situé entre les deux interrupteurs est connecté à la charge électrique C. Chaque interrupteur comporte un transistor de type IGBT, JFET... Si le transistor est de type IGBT, il est associé systématiquement à une diode.

Dans la suite de la description, on considère que chaque interrupteur ($T1_1$, $T2_1$, $T1_2$, $T2_2$, $T1_3$, $T2_3$) est composé d'un transistor IGBT et d'une diode.

En référence à la figure 2, les interrupteurs du module onduleur INV sont commandés par une loi de commande LC exécutée par des moyens de traitement du convertisseur de puissance. De manière connue, une loi de commande reçoit, en entrée, une référence de flux $\varphi_{ref}$ et une référence de vitesse $\omega_{ref}$ à appliquer à la charge électrique C et permet de déterminer les tensions de commande de référence $u_{ref}$ à appliquer ($u_{app}$) sur chaque phase de sortie U, V, W du convertisseur de puissance qui est connectée à la charge électrique C, en fonction de cette référence de flux $\varphi_{ref}$ et de cette référence de vitesse $\omega_{ref}$.

Dans la loi de commande LC, il est connu que les tensions de commande $u_{app}$ à appliquer sur chaque phase de sortie U, V, W du convertisseur de puissance sont déterminées à partir de tensions de commande de référence $u_{ref}$ représentatives de la référence de flux $\varphi_{ref}$ et de la référence de vitesse $\omega_{ref}$ appliquées en entrée d'un générateur de tension de référence UREF.

Dans cette configuration, il est connu que les tensions réelles $u_{real}$ qui sont mesurées sur les phases de sortie ne correspondent pas aux tensions de commande de référence $u_{ref}$ déterminées. Ceci est dû notamment aux non-linéarités du module onduleur, ces non-linéarités étant dues aux temps-morts insérés entre les commutations des interrupteurs, aux durées de commutation des interrupteurs et à la perte de tension intrinsèque de chaque interrupteur.

Le procédé de commande de l'invention permet de compenser la perte de tension et d'obtenir des tensions réelles $u_{real}$ mesurées sur les phases de sortie qui soient égales aux tensions de commande de référence $u_{ref}$ désirées. Le système de commande de l'invention comporte les moyens matériels et logiciels permettant de mettre en oeuvre ce procédé.

Le procédé de commande de l'invention consiste à déterminer, grâce à des moyens de calcul, des valeurs de correction $u_{cor}$ à appliquer à chaque tension de commande de référence $u_{ref}$ de manière à corriger la tension de commande $u_{app}$ correspondante à appliquer à la charge électrique C.

En référence à la figure 2, le procédé consiste à mesurer les tensions réelles $u_{real}$ appliquées sur les phases de sortie connectées à la charge électrique C. Ces tensions réelles $u_{real}$ sont par exemple récupérées sous forme d'au moins deux tensions composées $u_{real\_comp}$ (tension composée=tension mesurée entre deux phases de sortie). Les tensions composées réelles sont ensuite filtrées, par exemple par un filtre passe-bas F_Hw de type électronique (par opposition à logiciel), pour obtenir des tensions composées réelles filtrées $u_{real\_comp}^{F}$.

De manière correspondante, le procédé de commande consiste à filtrer, avec la même constante de temps que le filtre électronique décrit ci-dessus, par un filtre passe-bas de type logiciel F_Sw, les tensions de commande de référence $u_{ref}$, également récupérées sous forme de tensions composées $u_{ref\_comp}$, de manière à obtenir des tensions composées de référence filtrées $u_{ref\_comp}^{F}$.

Pour la mise en oeuvre de l'invention, nous avons employé les tensions composées car deux mesures de tension suffisent pour déterminer toutes les tensions simples réelles. Cependant, il eut été possible de partir directement des tensions simples réelles mesurées sur chaque phase de sortie. Les tensions simples de référence correspondantes seraient alors récupérées pour mettre en oeuvre le procédé.

Les tensions composées de référence filtrées $u_{ref\_comp}^{F}$ et les tensions composées réelles filtrées $u_{real\_comp}^{F}$ sont appliquées en entrée d'un bloc de correction permettant de déterminer des valeurs de correction $u_{cor}$

La démonstration qui suit permet, à partir des variables suivantes, d'expliquer le principe de la correction à appliquer :

- $i_s$ correspond au courant circulant dans une phase de sortie du convertisseur de puissance,

- $u_{app}$ correspond à la tension de commande à appliquer à la charge électrique,

- $u_{real}$ correspond à la tension réelle qui est appliquée à la charge électrique,

- $u_{ref}$ correspond à la tension de commande de référence permettant de déterminer la tension de commande à appliquer à la charge électrique,

- $u_{cor}$ correspond à la valeur de correction calculée permettant d'aligner la tension réelle sur la tension de commande de référence.

Le modèle en tension sur la sortie du module onduleur peut s'exprimer par la relation suivante :

$$u_{real} = u_{app} + perturbations$$

dans laquelle le terme *perturbations* doit être éliminé pour que la tension réelle appliquée à la charge électrique corresponde à la tension de commande à appliquer à la charge électrique. Comme décrit précédemment, le terme *perturbations* correspond notamment aux pertes de tension dans chaque interrupteur du module onduleur, à la résistance intrinsèque de chaque interrupteur et est lié au signe de courant qui circule dans chaque phase.

Selon l'invention, la tension de commande à appliquer à la charge électrique correspond à la somme de la tension de commande de référence et de la valeur de correction selon l'expression suivante :

$$u_{app} = u_{ref} + u_{cor}$$

Un filtrage électronique de la tension réelle s'exprime par la relation suivante :

$$T \cdot \frac{d}{dt} u_{real}{}^F = u_{real} - u_{real}{}^F$$

Dans laquelle :

- T représente la constante de temps du filtre électronique,
- $u_{real}{}^F$ correspond à la tension de commande réelle filtrée

Un filtrage logiciel de la tension de commande de référence s'exprime par la relation suivante :

$$T \cdot \frac{d}{dt} u_{ref}{}^F = u_{ref} - u_{ref}{}^F$$

Dans laquelle :

- T représente la constante de temps du filtre logiciel, identique à celle du filtrage électronique,
- $u_{ref}{}^F$ correspond à la tension de commande de référence filtrée.

En définissant $\Delta u = u^F - u_{ref}{}^F$

On obtient la définition de l'erreur :

$$T \cdot \frac{d}{dt} \Delta u = u_{real} - u_{ref} - \Delta u$$

$$T \cdot \frac{d}{dt} \Delta u = -\Delta u + u_{app} + perturbations - u_{ref}$$

$$T \cdot \frac{d}{dt} \Delta u = -\Delta u + u_{cor} + perturbations$$

Pour rejeter le terme *perturbations,* un correcteur PI à action proportionnelle-intégrale peut être employé dans les expressions suivantes :

$$\boxed{\begin{array}{l} u_{cor} = -K_P \cdot \Delta u - u_I \\ \dfrac{d}{dt} u_I = K_I \cdot \Delta u \end{array}}$$

dans lesquelles $K_P$ et $K_I$ correspondent aux gains du correcteur PI à action proportionnelle-intégrale.

Par ailleurs, il est également possible d'ajouter un terme à action anticipative ("feedforward") pour déterminer la valeur de correction. Les relations de correction sont alors les suivantes :

$$\boxed{\begin{array}{l} u_{cor} = -perturbations_{EST} - K_P \cdot \Delta u - u_I \\ \dfrac{d}{dt} u_I = K_I \cdot \Delta u \end{array}}$$

Dans lesquelles le terme *perturbations$_{EST}$*, qui correspond au terme à action anticipative par exemple égal à *Vcomp·sign(i$_s$)*, représente une image de la fonction de perturbation. *Vcomp* correspond à une tension de compensation qui entraîne les non-linéarités du module onduleur.

En injectant dans le correcteur PI à action proportionnelle-intégrale les tensions de commande de référence filtrées, prises par exemple sous la forme de tensions composées, et les tensions réelles filtrées mesurées sur les phases de sortie, prises par exemple sous forme de tensions composées, il est ainsi possible de déterminer les valeurs de correction $u_{cor}$. Ces valeurs de correction $u_{cor}$ sont ajoutées aux tensions de commande de référence $u_{ref}$ de manière à obtenir des tensions de commande $u_{app}$ à appliquer à la charge électrique C qui tiennent compte des perturbations diverses, notamment des non-linéarités (*perturbations*) dans les commutations des interrupteurs.

Selon l'invention, le système de commande peut comporter des moyens de désactivation de la méthode de correction décrite ci-dessus lorsque la vitesse du moteur devient trop élevée. En effet, à haute vitesse, les effets sur la tension provoqués par les temps morts lors des commutations des interrupteurs deviennent négligeables, ce qui rend la méthode de correction presque inutile.

**Revendications**

1. Procédé de commande mis en oeuvre dans un convertisseur de puissance, ledit convertisseur de puissance comportant un module onduleur (INV) commandé par une loi de commande permettant de déterminer une tension de commande ($u_{app}$) à appliquer à une charge électrique (C) en fonction d'une tension de commande de référence ($u_{ref}$), **caractérisé en ce que** le procédé de commande comporte :

   - une étape de mesure d'une tension réelle ($u_{real}$) appliquée à la charge électrique (C),
   - une première étape de filtrage d'une tension représentative de la tension réelle ($u_{real}$) appliquée à la charge électrique pour obtenir une première tension filtrée,
   - une deuxième étape de filtrage d'une tension représentative de la tension de commande de référence ($u_{ref}$) pour obtenir une deuxième tension filtrée,
   - une étape de détermination d'une valeur de correction ($u_{cor}$) à appliquer à la tension de commande de référence ($u_{ref}$), ladite valeur de correction ($u_{cor}$) étant déterminée à partir de la première tension filtrée et de la deuxième tension filtrée.

2. Procédé selon la revendication 1, **caractérisé en ce que** la première étape de filtrage est mise en oeuvre grâce à un filtre passe-bas (F_Hw) de type électronique.

3. Procédé selon la revendication 1 ou 2, **caractérisé en ce que** la deuxième étape de filtrage est mise en oeuvre grâce à un filtre passe-bas (F_Sw) de type logiciel.

4. Procédé selon l'une des revendications 1 à 3, **caractérisé en ce que** la valeur de correction ($u_{cor}$) est déterminée en employant un correcteur (PI) à action proportionnelle-intégrale.

5. Système de commande employé dans un convertisseur de puissance, ledit convertisseur de puissance comportant un module onduleur (INV) commandé par une loi de commande permettant de déterminer une tension de commande ($u_{app}$) à appliquer à une charge électrique (C) en fonction d'une tension de commande de référence ($u_{ref}$), **caractérisé en ce que** le système de commande comporte :

   - des moyens de mesure d'une tension réelle ($u_{real}$) appliquée à la charge électrique (C),
   - des premiers moyens de filtrage d'une tension représentative de la tension réelle ($u_{real}$) appliquée à la charge électrique pour obtenir une première tension filtrée,
   - des deuxièmes moyens de filtrage d'une tension représentative de la tension de commande de référence ($u_{ref}$) pour obtenir une deuxième tension filtrée,
   - des moyens de détermination d'une valeur de correction ($u_{cor}$) à appliquer à la tension de commande de référence ($u_{ref}$) en fonction de la première tension filtrée et de la deuxième tension filtrée.

6. Système selon la revendication 5, **caractérisé en ce que** les premiers moyens de filtrage comportent un filtre passe-bas (F_Hw) de type électronique.

7. Système selon la revendication 5 ou 6, **caractérisé en ce que** les deuxièmes moyens de filtrage comportent un filtre passe-bas (F_Sw) de type logiciel.

**8.** Système selon l'une des revendications 5 à 7, **caractérisé en ce que** la constante de temps des premiers moyens de filtrage et la constante de temps des deuxièmes moyens de filtrage sont sensiblement identiques.

**9.** Système selon l'une des revendications 5 à 8, **caractérisé en ce que** la valeur de correction ($u_{cor}$) est déterminée en employant un correcteur (PI) à action proportionnelle-intégrale.

**Patentansprüche**

**1.** Steuerungsverfahren, das in einem Leistungswandler eingesetzt wird, wobei der Leistungswandler ein Wechselrichtermodul (INV) umfasst, das durch ein Steuerungsgesetz gesteuert wird, das es ermöglicht, eine Steuerspannung ($u_{app}$), die an eine elektrische Last (C) anzulegen ist, in Abhängigkeit von einer Referenzsteuerspannung ($u_{ref}$) zu bestimmen, **dadurch gekennzeichnet, dass** das Steuerungsverfahren umfasst:

- einen Schritt des Messens der tatsächlichen Spannung ($u_{real}$), die an die elektrische Last (C) angelegt wird,
- einen ersten Schritt des Filterns einer Spannung, die für die tatsächliche Spannung ($u_{real}$), die an die elektrische Last angelegt wird, repräsentativ ist, um eine erste gefilterte Spannung zu erhalten,
- einen zweiten Schritt des Filterns einer Spannung, die für die Referenzsteuerspannung ($u_{ref}$) repräsentativ ist, um eine zweite gefilterte Spannung zu erhalten,
- einen Schritt der Bestimmung eines Korrekturwerts ($u_{cor}$), der an die Referenzsteuerspannung ($u_{ref}$) anzulegen ist, wobei der Korrekturwert ($u_{cor}$) auf Basis der ersten gefilterten Spannung und der zweiten gefilterten Spannung bestimmt wird.

**2.** Verfahren nach Anspruch 1, **dadurch gekennzeichnet, dass** der erste Filterschritt mit einem Tiefpassfilter (F_Hw) elektronischen Typs eingesetzt wird.

**3.** Verfahren nach Anspruch 1 oder 2, **dadurch gekennzeichnet, dass** der zweite Filterschritt mit einem Tiefpassfilter (F_Sw) vom Softwaretyp eingesetzt wird.

**4.** Verfahren nach einem der Ansprüche 1 bis 3, **dadurch gekennzeichnet, dass** der Korrekturwert ($u_{cor}$) bestimmt wird, wobei ein Korrekturmittel (PI) mit proportional-integraler Wirkung eingesetzt wird.

**5.** Steuerungssystem, das in einem Leistungswandler eingesetzt wird, wobei der Leistungswandler ein Wechselrichtermodul (INV) umfasst, das durch ein Steuerungsgesetz gesteuert wird, das es ermöglicht, eine Steuerspannung ($u_{app}$), die an eine elektrische Last (C) anzulegen ist, in Abhängigkeit von einer Referenzsteuerspannung ($u_{ref}$) zu bestimmen, **dadurch gekennzeichnet, dass** das Steuerungssystem umfasst:

- Mittel zum Messen der tatsächlichen Spannung ($u_{real}$), die an die elektrische Last (C) angelegt wird,
- erste Mittel zum Filtern einer Spannung, die für die tatsächliche Spannung ($u_{real}$), die an die elektrische Last angelegt wird, repräsentativ ist, um eine erste gefilterte Spannung zu erhalten,
- zweite Mittel zum Filtern einer Spannung, die für die Referenzsteuerspannung ($u_{ref}$) repräsentativ ist, um eine zweite gefilterte Spannung zu erhalten,
- Mittel zu Bestimmung eines Korrekturwerts ($u_{cor}$), der an die Referenzsteuerspannung ($u_{ref}$) anzulegen ist, in Abhängigkeit von der ersten gefilterten Spannung und der zweiten gefilterten Spannung.

**6.** System nach Anspruch 5, **dadurch gekennzeichnet, dass** die ersten Filtermittel einen Tiefpassfilter (F_Hw) elektronischen Typs umfassen.

**7.** System nach Anspruch 5 oder 6, **dadurch gekennzeichnet, dass** die zweiten Filtermittel einen Tiefpassfilter (F_Sw) vom Softwaretyp umfassen.

**8.** System nach einem der Ansprüche 5 bis 7, **dadurch gekennzeichnet, dass** die Zeitkonstante der ersten Filtermittel und die Zeitkonstante der zweiten Filtermittel im Wesentlichen identisch sind.

**9.** System nach einem der Ansprüche 5 bis 8, **dadurch gekennzeichnet, dass** der Korrekturwert ($u_{cor}$) bestimmt wird, wobei ein Korrekturmittel (PI) mit proportional-integraler Wirkung eingesetzt wird.

**EP 2 780 771 B1**

**Claims**

1. A control method implemented in a power converter, said power converter comprising an inverter module (INV) controlled by a control law making it possible to determine a control voltage ($u_{app}$) to be applied to an electrical load (L) as a function of a reference control voltage ($u_{ref}$), **characterized in that** the control method comprises:

   - a step of measuring a real voltage ($u_{real}$) applied to the electrical load (L),
   - a first step of filtering a voltage representative of the real voltage ($u_{real}$) applied to the electrical load so as to obtain a first filtered voltage,
   - a second step of filtering a voltage representative of the reference control voltage ($u_{ref}$) so as to obtain a second filtered voltage,
   - a step of determining a correction value ($u_{cor}$) to be applied to the reference control voltage ($u_{ref}$), said correction value ($u_{cor}$) being determined on the basis of the first filtered voltage and of the second filtered voltage.

2. The method as claimed in claim 1, **characterized in that** the first filtering step is implemented by virtue of a low-pass filter (F_Hw) of electronic type.

3. The method as claimed in claim 1 or 2, **characterized in that** the second filtering step is implemented by virtue of a low-pass filter (F_Sw) of software type.

4. The method as claimed in one of claims 1 to 3, **characterized in that** the correction value ($u_{cor}$) is determined by employing a proportional-integral action corrector (PI).

5. A control system employed in a power converter, said power converter comprising an inverter module (INV) controlled by a control law making it possible to determine a control voltage ($u_{app}$) to be applied to an electrical load (L) as a function of a reference control voltage ($u_{ref}$), **characterized in that** the control system comprises:

   - means for measuring a real voltage ($u_{real}$) applied to the electrical load (L),
   - first means for filtering a voltage representative of the real voltage ($u_{real}$) applied to the electrical load so as to obtain a first filtered voltage,
   - second means for filtering a voltage representative of the reference control voltage ($u_{ref}$) so as to obtain a second filtered voltage,
   - means for determining a correction value ($u_{cor}$) to be applied to the reference control voltage ($u_{ref}$) as a function of the first filtered voltage and of the second filtered voltage.

6. The system as claimed in claim 5, **characterized in that** the first filtering means comprise a low-pass filter (F_Hw) of electronic type.

7. The system as claimed in claim 5 or 6, **characterized in that** the second filtering means comprise a low-pass filter (F_Sw) of software type.

8. The system as claimed in one of claims 5 to 7, **characterized in that** the time constant of the first filtering means and the time constant of the second filtering means are substantially identical.

9. The system as claimed in one of claims 5 to 8, **characterized in that** the correction value ($u_{cor}$) is determined by employing a proportional-integral action corrector (PI).

**Fig. 1**

INV

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004006421 A
- EP 2362515 A
- EP 0595319 A
- WO 2009138808 A